# EUROPEAN PATENT APPLICATION

(11) **EP 4 342 562 A1**
(43) Date of publication of application: **27.03.2024**
(21) Application number: 22196487.7
(22) Date of filing: 20.09.2022
(51) Int. Cl.: B01D 46/24, B01D 46/64

(54) **GAS FILTER SYSTEM**

(71) Applicant: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71691 Freiberg (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(57) **Abstract**

The invention refers to a gas filter system (10) comprising
- an outer filter element (20) having a first filter medium (22) arranged between a first end cap (24) and a second end cap (26); and
- an inner filter element (30) having a second filter medium (32) arranged between a third end cap (34) and a fourth end cap (36);
the first filter medium (22) being arrangeable to surround the inner filter medium (32); wherein the first, second, third and fourth end caps (24, 26, 34, 36) are open.

## Description

### Technical field

The present invention refers to a gas filter system comprising
- an outer filter element having a first filter medium arranged between a first end cap and a second end cap; and
- an inner filter element having a second filter medium arranged between a third end cap and a fourth end cap;
the first filter medium being arrangeable to surround the second filter medium.

### Background

Such a filter system is known from DE 10 2018 215 603 A1.

In some applications, it is required to filter a gas flow with two filter elements. Typically, the gas flows through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells.

From US 2006/0107836 A1 an air filter for internal combustion engines is known. The air filter comprises a round filter element, which is sealingly disposed between an unfiltered air inlet of a housing and a filtered air outlet. In addition, an adsorber element is disposed on an interior wall of the housing such that the adsorber element is arranged within the round filter element.

WO 2015/092681 A1 discloses a multi-layered filter element comprising two layers of filtering material made of pleated paper. The two layers of filtering material are undetachably held together by sealing gaskets made of plastic material in which the paper of the layers is partially incorporated.

From DE 10 2017 005 797 A1 a filter system having a central tube in a housing is known. A secondary element is arranged inside a filter element and slidable along the central tube. In a first position, the secondary element opens a fluid path through an open area of the central tube; in a second position, the secondary element closes the fluid path through the open area of the central tube.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end.

It is an object of the invention to facilitate manufacturing and mounting of a gas filter system with two filter elements, which are adapted for joint use.

This is achieved by a gas filter system according to claim 1 and use of filter elements according to claim 17. Advantageous embodiments are given in the subclaims and the description.

### Disclosure of the invention

In accordance with the invention, a gas filter system is provided. The gas filter system comprises
- an outer filter element having a first filter medium arranged between a first end cap and a second end cap; and
- an inner filter element having a second filter medium arranged between a third end cap and a fourth end cap.

The first filter medium is arrangeable to surround the second filter medium. The filter media may be hollow-cylindrical or conical, preferably with an essentially circular or oval cross section. The filter media each surround a longitudinal axis. In particular, the filter media may be arranged concentric to a common longitudinal axis.

Indications of directions such as radial or axial refer to the longitudinal axis of the filter system. In principle, the first and third end caps are associated with a first axial end; the second and fourth end caps are associated with a second axial end.

During use of the gas filter system, a gas flow is typically first directed through the first filter medium of the outer filter element and then through the second filter medium of the inner filter element. Appropriate sealing of the filter elements towards a housing or between the filter elements can be provided as described below.

According to the invention, the first, second, third and fourth end caps are open. The first, second, third and fourth end caps generally have a central opening. Open end caps require less material than closed end caps. Furthermore, simpler tooling can be used to manufacture open end caps. Mounting of the filter elements is also facilitated by the use of open end caps. In particular, it is possible to reach into the outer filter element from one axial end while inserting the inner filter element from the other axial end. Further, open end caps allow for visual inspection of the interior of the filter elements prior to and during mounting.

Preferably, the first end cap of the outer filter element and the third end cap of the inner filter element are sealed against each other. The first end cap may have a (second) sealing section for sealing abutment against the third end cap, preferably in the radial direction. Alternatively, the third end cap may have a (second) sealing section for sealing abutment against the first end cap, preferably in the radial direction. The second sealing section may be an integral part of the first or third end cap, respectively.

In general, sealing sections described within the context of this invention are softer than the counter-part against which they shall seal. In particular, a respective sealing section can be made from polyurethane, preferably polyurethane foam. The respective counter-part can be made from rigid plastic.

Preferably, the second end cap of the outer filter element and the fourth end cap of the inner filter element are sealed against each other. The second end cap may have a (fourth) sealing section for sealing abutment against the fourth end cap, preferably in the radial direction. Alternatively, the fourth end cap may have a (fourth) sealing section for sealing abutment against the second end cap, preferably in the radial direction. The fourth sealing section may be an integral part of the second or fourth end cap, respectively.

The first end cap of the outer filter element can have a first sealing section for sealing abutment against a housing, preferably in the axial direction. Alternatively or additionally, the first sealing section may provide radial sealing abutment against the housing. The first sealing section may be an integral part of the first end cap.

The third end cap of the inner filter element can have a third sealing section for sealing abutment against a housing, preferably in the axial direction. Alternatively or additionally, the third sealing section may provide radial sealing abutment against the housing. The third sealing section may be an integral part of the third end cap.

Preferably, the gas filter system further comprises a housing, in which the inner and outer filter elements are arrangeable. In a mounted state, the filter elements are arranged inside the housing. Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

The housing may have a central tube, which extends into the inner filter element at the third end cap in a mounted state of the filter system. The central tube provides guidance to the inner filter element and support to the second filter medium.

The housing can have a dome. Preferably, the dome protrudes into the central tube. In other words, the dome and the central tube may overlap each other in the axial direction. The dome can provide guidance during mounting. Undesired movement of the filter elements during operation can be effectively reduced with this design. Upon heavy vibration, the central tube can bear against the dome, in order to limit vibrational movement of the filter elements.

The central tube can be held at an axial collar of the housing. This is advantageous for manufacturing the filter housing. A snap fit may be provided between the collar and the central tube.

The third end cap can be sealed against the collar or the central tube. In particular, the third sealing section of the third end cap may sealingly abut the collar or the central tube, in particular in the radial direction. In this way, the inside of the inner filter element can be conveniently sealed towards the housing.

The central tube may have a closed bottom face. This allows using the central tube for sealing of the filter elements at the second end.

The fourth end cap can be sealed against the central tube. In particular, the fourth end cap can have a fifth sealing section for sealing abutment against the central tube, preferably in the radial direction. The fifth sealing section may be an integral part of the fourth end cap.

The second end cap can be sealed against the central tube. In particular, the second end cap can have a sixth sealing section for sealing abutment against the central tube, preferably in the radial direction. The sixth sealing section may be an integral part of the fourth end cap.

Preferably, the outer filter element has a support tube. The support tube may have a radially inward facing end face, which end face is embedded in the second end cap. The end face of the support tube stiffens the second end cap. Thereby, sealing of the second end cap against the central tube is facilitated.

The housing can have a first skirt, which protrudes between the second end cap and the fourth end cap. The first skirt provides guidance and support to the filter elements at the second end. The first skirt may exhibit a radially outward facing sealing surface and/or a radially inward facing sealing surface.

The second end cap can be sealed against the first skirt. In particular, the second end cap can have a seventh sealing section for sealing abutment against the first skirt, preferably in the radial direction. The seventh sealing section may be an integral part of the second end cap.

The fourth end cap can be sealed against the first skirt. In particular, the fourth end cap can have an eighth sealing section for sealing abutment against the first skirt, preferably in the radial direction. The eighth sealing section may be an integral part of the fourth end cap.

The housing can have a second skirt, which protrudes into the inner filter element at the fourth end cap. The second skirt provides guidance and support to the inner filter element at the second end. The second skirt may exhibit a radially outward facing sealing surface. The second skirt and the central tube may overlap each other in the axial direction. In particular, the central tube may extend into the second skirt.

The fourth end cap can be sealed against the second skirt. In particular, the fourth end cap can have a ninth sealing section for sealing abutment against the second skirt, preferably in the radial direction. The ninth sealing section may be an integral part of the fourth end cap.

The first or second skirt are typically formed at the second housing part. Radial sealing of the second and/or fourth end cap against the first and/or second skirt can make the filter elements stick to the second housing part upon opening of the housing. In this way, the filter elements can be conveniently removed and exchanged. For mounting, the filter elements can be held at the first and/or second skirt. Thus, common mounting of the filter elements and the second housing part is enabled.

The first or the second filter medium, in particular the second filter medium of the inner filter element, can have gas-adsorbing properties and preferably contains activated carbon. Typical harmful gases are SO₂, NOₓ and NH₃.

The first or the second filter medium, in particular the first filter medium of the outer filter element, can be made with cellulose.

The first and/or the second filter medium may be pleated.

End caps, which have at least one sealing section, can be made from polyurethane, in particular polyurethane foam. Preferably, an end cap which has at least one sealing section, is monolithic with its sealing section(s).

An end cap, against which a sealing section shall abut, can be made from rigid plastic. A rigid plastic end cap can be glued to the respective filter medium.

The invention also relates to the use of an outer filter element and/or an inner filter element in a gas filter system according to the invention, as described above. The gas filter system may be used for cathode air filtration of a fuel cell in an electric vehicle.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a first embodiment of a gas filter system according to the invention, the gas filter system comprising an outer filter element, an inner filter element and a housing, in a schematic sectional view;
- Fig. 2: shows the outer filter element of the gas filter system of Fig. 1, in a schematic sectional view;
- Fig. 3: shows the inner filter element of the gas filter system of Fig. 1, in a schematic sectional view;
- Fig. 4: shows a first end of the filter system of Fig. 1 in an enlarged view;
- Fig. 5: shows a second end of the filter system of Fig. 1 in an enlarged view;
- Fig. 6: shows a second end of a second embodiment of a filter system according to the invention in a schematic sectional view;
- Fig. 7: shows a first end of a third embodiment of a filter system according to the invention in a schematic sectional view;
- Fig. 8: shows a first end of a fourth embodiment of a filter system according to the invention in a schematic sectional view;
- Fig. 9: shows a second end of the fourth embodiment of the filter system according to the invention, in a schematic sectional view;
- Fig. 10: shows a first end of a fifth embodiment of a filter system according to the invention in a schematic sectional view;
- Fig. 11: shows a second end of the fifth embodiment of the filter system according to the invention, in a schematic sectional view;
- Fig. 12: shows a second end of a sixth embodiment of a filter system according to the invention in a schematic sectional view.

### Detailed description

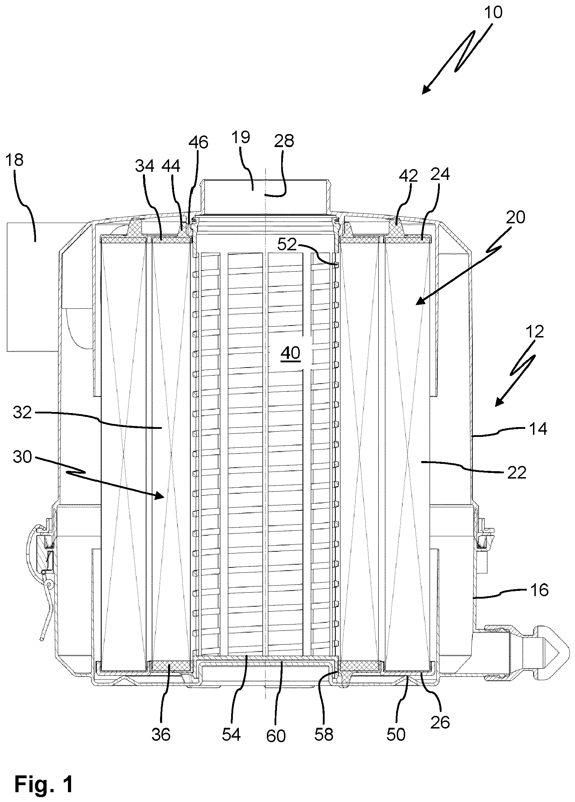

**Figure 1** shows a gas filter system **10.** The filter system 10 comprises a housing **12.** The housing has a first housing part **14** and a second housing part **16,** which are attachable to each other. An inlet **18** allows gas to enter the housing 12. Here the inlet is formed at the first housing part 14. An outlet **19** for filtered gas is also formed at the first housing part 14. The housing parts 14, 16 can be made from metal and/or rigid plastic.

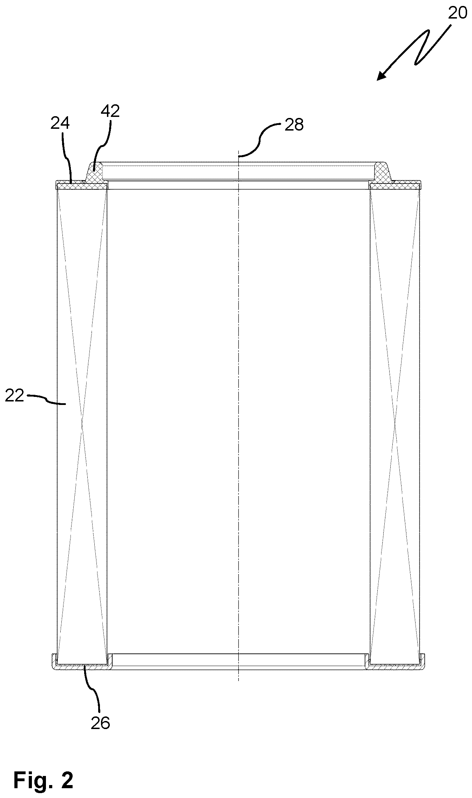

The filter system 10 further comprises an outer filter element **20,** see also **Figure 2****.** The outer filter element 20 comprises a first filter medium **22.** The first medium 22 is contained between a first end cap **24** and a second end cap **26.** The first filter medium 22 surrounds a longitudinal axis **28** in a ciruclar manner. The first filter medium 22 can be made from pleated cellulose paper.

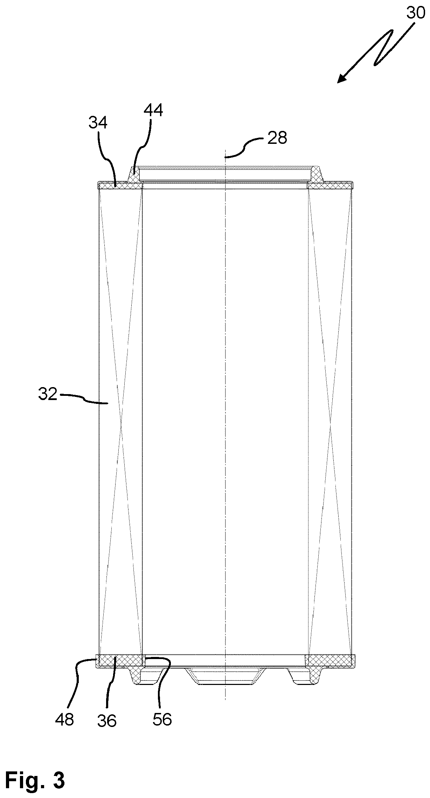

The filter system 10 further comprises an inner filter element **30,** see also **Figure 3****.** The inner filter element 30 comprises a second filter medium **32.** The second medium 32 is contained between a third end cap **34** and a fourth end cap **36.** The second filter medium 32 also surrounds the longitudinal axis 28 in a ciruclar manner. The second filter medium 32 can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

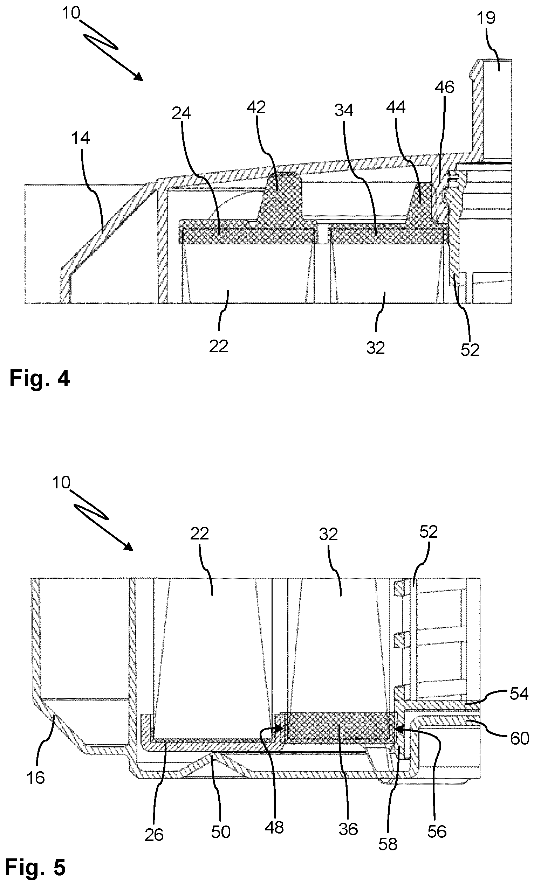

At a first end of the filter system 10, the first end cap 24 is arranged to surround the third end cap 34, see also **Figure 4****.** The first end cap 24 and the third end cap 34 each have a central opening, see also Figures 2 and 3, respectively. The outlet 19 is in fluid communication with a clean side **40** within the inner filter element 30, cf. Figure 1.

A first sealing section **42** axially protrudes form the first end cap 24. The first sealing section 42 sealingly abuts the first housing part 14 in the axial direction. Here, the first end cap 24 with the first sealing section 42 is integrally made from polyurethane foam.

A third sealing section **44** axially protrudes from the third end cap 34. The third sealing section 44 sealingly abuts the first housing part 14 in the radial direction. In particular, the third sealing section 44 sealingly rests against a collar **46,** which axially protrudes into the housing 12 at the outlet 19. Here, the third end cap 34 and the third sealing section 44 are integrally made from polyurethane foam.

At the second end of the filter system 10, the second end cap 26 is arranged to surround the fourth end cap 36, see also **Figure 5****.** The second end cap 26 and the fourth end cap 36 each have a central opening, see also Figures 2 and 3, respectively.

The second end cap 26 and the fourth end cap 36 are sealed against each other. In the depicted embodiment, a radial sealing is established. The fourth end cap 36, at its outer perimeter, has a fourth sealing section **48.** The fourth sealing section 48 sealingly abuts the second end cap 26 in the radial direction.

The second end cap 26 can be made from rigid plastic and is preferably glued to the first filter medium 22. The second housing part 16 can have a bottom support projection **50,** which bears against the second end cap 26 in the axial direction.

A central tube **52** of the housing 12 is held at the axial collar 46. The central tube 52 extends through the opening of the third end cap 34 beyond the fourth end cap 36. The central tube 52 can be made from rigid plastic. In the first embodiment, the central tube 52 has a closed bottom face **54,** see in particular Figures 1 and 5.

In the first embodiment, the fourth end cap 36 is sealed against the central tube 52. A fifth sealing section **56** is formed at the opening of the fourth end cap 36. The fifth sealing section 56 sealingly abuts the central tube 52 in the radial direction. The central tube 52 may have an annular protrusion **58,** which is arranged beyond the closed bottom face 54, as seen from the first end with the outlet 19. At the annular protrusion 58, a radially outward facing sealing surface for abutment of the fifth sealing section 56 is formed.

The fourth end cap 36 with the fourth sealing section 48 and the fifth sealing section 56 can be integrally made from polyurethane foam. In other words, the fourth end cap 36 with its sealing sections 48, 56 can be a monolitic part.

The housing may have a dome **60,** see Figures 1 and 5. Here, the dome 60 is formed at the second housing part 16, which can be a removable cover. The dome 60 extends towards the inside of the inner filter element 30. In particular, the dome 60 extends into the central tube 52 axially at the annular protrusion 58. In other words, the central tube 52 and the dome 60 overlap each other in the axial direction. The closed bottom face 54 of the central tube 52 is arranged slightly above the dome 60.

The second end cap 26 and the fourth end cap 36 may have a circular cross section. In order to install the filter elements 20, 30 in a defined position in circumfererential direction, the end caps 26, 36 and the housing can have a radially directed projection-receiver arrangement. For example, a radially outward directed projection on the fourth end cap 36 may project into an indentation in the second end cap 26. Likewise, an outwardly directed projection on the second end cap 26 can project into a recess in the wall of the housing or a projection on the housing inner wall can project into a recess in the outer circumference of the second end cap 26.

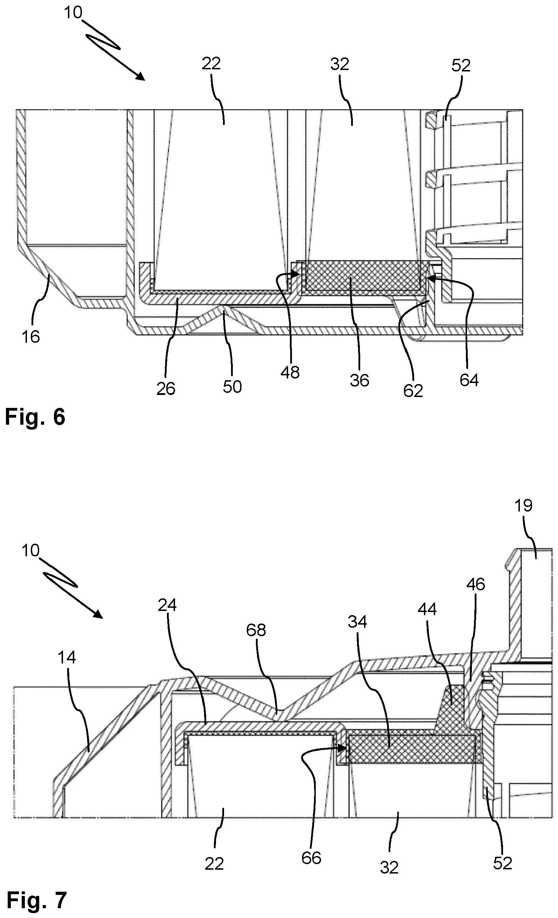

A second embodiment of the gas filter system 10, a first end of which is partially depicted in **Figure 6****,** corresponds substantially to the first embodiment of the gas filter system 10, cf. Figures 1 to 5 and the description above.

In the second embodiment, a second skirt **62** is formed at the second housing part 16. The second skirt 62 protrudes into the inner filter element 30 at the fourth end cap 36. The central tube 52 and the second skirt 62 overlap each other in the axial direction. In particular, the central tube 52 extends into the second skirt 62 with its end section, which can have a smaller diameter than a middle section of the central tube 52.

In the second embodiment, the fourth end cap 36 is sealed against the second skirt 62. A ninth sealing section **64** is formed at the opening of the fourth end cap 36. The ninth sealing section 64 sealingly abuts the second skirt 62 in the radial direction.

A third embodiment of the gas filter system 10, a second end of which is partially depicted in **Figure 7****,** corresponds substantially to the first embodiment of the gas filter system 10, cf. Figures 1 to 5 and the description above.

In the third embodiment, the first end cap 24 and the third end cap 34 are sealed against each other. Here, a radial sealing is established. The third end cap 34 has a second sealing section **66.** The second sealing section 66 sealingly abuts the first end cap 24 in the radial direction.

The third end cap 34 with the second sealing section 66 and the third sealing section 44 can be integrally made from polyurethane foam. In other words, the third end cap 34 with its sealing sections 44, 66 can be a monolitic part.

The first end cap 24 can be made from rigid plastic and is preferably glued to the first filter medium 22. The first housing part 14 can have a top support projection **68,** which bears against the first end cap 24 in the axial direction.

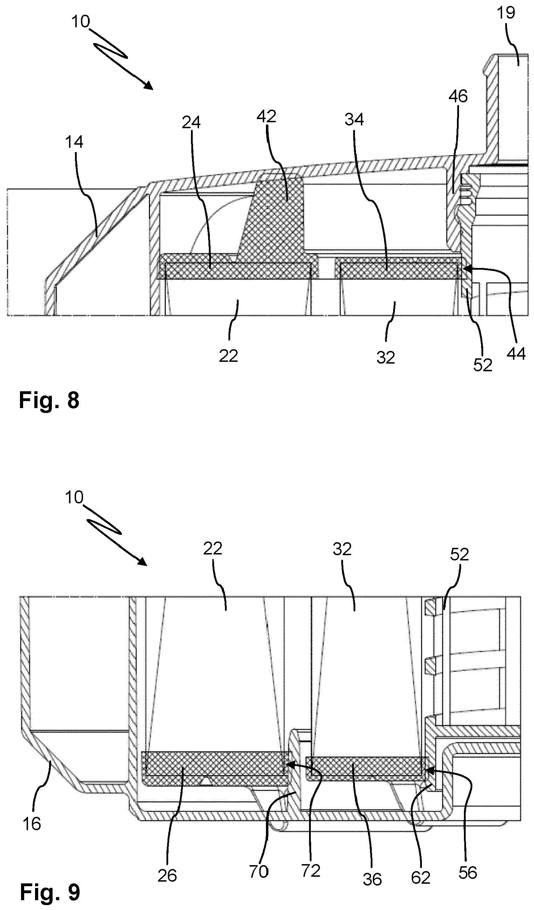

A fourth embodiment of the gas filter system 10, a first and second end of which are partially depicted in **Figures 8** and **9****,** corresponds in its basic structur to the first embodiment of the gas filter system 10, cf. Figures 1 to 5 and the description above.

In the fourth embodiment, the third end cap 34 of the inner filter element 30 is sealed against the central tube 52, see Figure 8. A third sealing section 44 radially delimits the opening of the third end cap 34. The third sealing section 44 sealingly abuts the central tube 52 of the housing 12 in the radial direction. Here, the third end cap 34 and the third sealing section 44 are integrally made from polyurethane foam.

As in the first embodiment, also in the fourth embodiment the fourth end cap 36 of the inner filter element 30 is sealed against the central tube 52 via the fifth sealing section 56, see Figure 9.

However, in the fourth embodiment a first skirt **70** of the second housing part 16 axially protrudes between the second end cap 26 and the fourth end cap 36. The second end cap 26 is sealed against the first skirt 70. A seventh sealing section **72** radially delimits the opening of the second end cap 26. The seventh sealing section 72 sealingly abuts the first skirt 70 in the radial direction. Here, the second end cap 26 and the seventh sealing section 72 are integrally made from polyurethane foam.

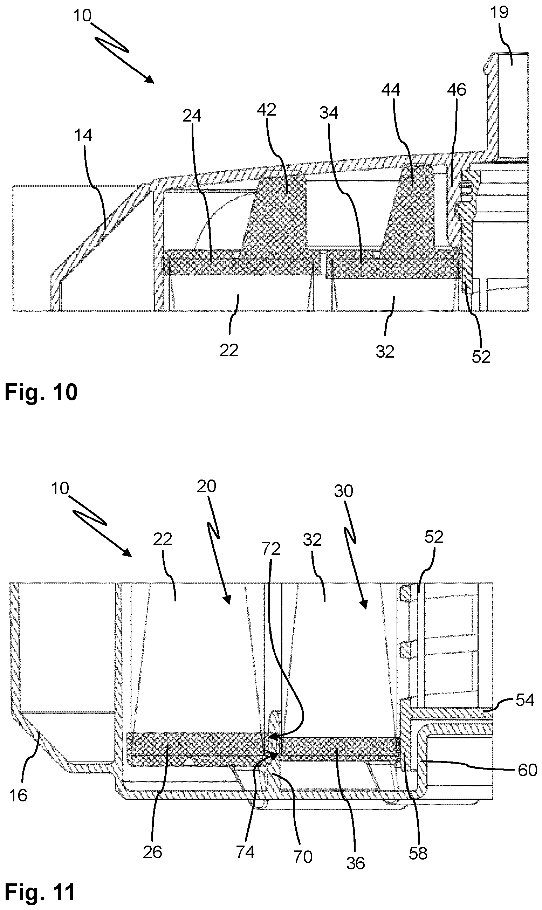

A fifth embodiment of the gas filter system 10, a first and second end of which are partially depicted in **Figures 10** and **11****,** corresponds substantially to the fourth embodiment of the gas filter system 10, cf. Figures 8 and 9 and the description above.

In the fifth embodiment, an axial sealing between the third end cap 34 and the first housing part 14 is established, see Figure 10. A third sealing section 44 axially protrudes from the third end cap 34. The third sealing section 44 sealingly abuts the first housing part 14 in the axial direction. Here, the third end cap 34 and the third sealing section 44 are integrally made from polyurethane foam.

As in the first and fourth embodiments, also in the fifth embodiment axial sealing between the first end cap 24 and the first housing part 14 is established via the first sealing section 42.

As in the fourth embodiment, also in the fifth embodiment radial sealing between the second end cap 26 and the first skirt 70 is established via the seventh sealing section 72. However, in the fifth embodiment, also the fourth end cap 36 is sealed against the first skirt 70. An eighth sealing section **74** is formed at the outer perimeter of the fourth end cap 36. The eighth sealing section 74 sealingly abuts the first skirt 70 in the radial direction. Here, the fourth end cap 36 and the eighth sealing section 74 are integrally made from polyurethane foam.

Since radial sealing is established at the second end (second and fourth end caps 26, 36), while axial sealing is established at the first end (first and third end caps 24, 34), the filter elements 20, 30 will be held at the second housing part 16, when the housing is opened. This facilitates servicing the gas filter system and replacing the filter elements 20, 30.

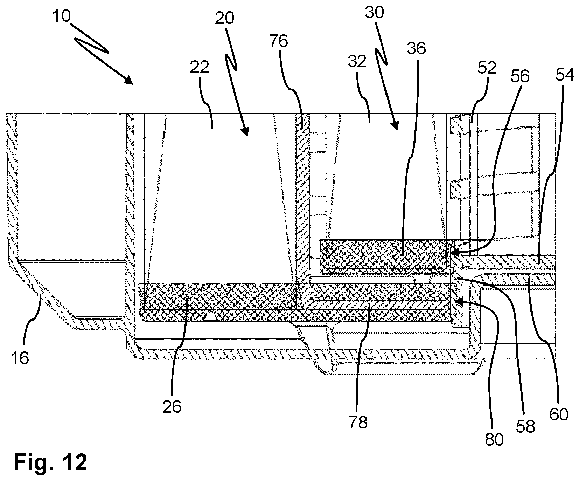

A sixth embodiment of the gas filter system 10, a second end of which is partially depicted in **Figure 12****,** corresponds substantially to the first embodiment of the gas filter system 10, cf. Figures 1 to 5, or the fourth embodiment, cf. Figures 8 and 9 and the description above.

As in the first or fourth embodiments, also in the sixth embodiment radial sealing bewteen the fourth end cap 36 and the central tube 52 is established via the fifth sealing section 56. Note that the central tube 52 may be circumferentially closed also slightly above the closed bottom face 54 for sealing abutment of the fifth sealing section 56.

In the sixth embodiment, the second end cap 26 of the outer filter element 20 is sealed against the central tube 52. The outer filter element 20 is longer (in axial direction) than the inner filter element 30. The outer filter element 20 may comprise a support tube **76.** Here, the support tube 76 has an end face **78,** which extends radially inwardly at the second end cap 26. In particular, the end face 78 is embedded in the second end cap 26. A sixth sealing section **80** radially delimits the opening in the second end cap 26. Note that the sixth sealing section 80 is arranged radially to the inside of the end face 78. The sixth sealing section 80 sealingly abuts the central tube 52 in the radial direction. In particular, the sixth sealing section 80 may rest against the annular protrusion 58 of the central tube 52. Here, the second end cap 26 and the sixth sealing section 80 are integrally made from polyurethane foam.

### Reference Numbers

Gas filter system 10
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**
Clean side **40**
First sealing section **42**
Third sealing section **44**
Collar **46**
Fourth sealing section **48**
Bottom support projection **50**
Central tube **52**
Bottom face **54**
Fifth sealing section **56**
Protrusion **58**
Dome **60**
Second skirt **62**
Ninth sealing section **64**
Second sealing section **66**
Top support projection **68**
First skirt **70**
Seventh sealing section **72**
Eighth sealing section **74**
Support tube **76**
End face **78**
Sixth sealing section **80**

## Claims

1. Gas filter system (10) comprising
- an outer filter element (20) having a first filter medium (22) arranged between a first end cap (24) and a second end cap (26); and
- an inner filter element (30) having a second filter medium (32) arranged between a third end cap (34) and a fourth end cap (36);
the first filter medium (22) being arrangeable to surround the inner filter medium (32);
wherein the first, second, third and fourth end caps (24, 26, 34, 36) are open.

2. Gas filter system (10) according to claim 1, wherein the first end cap (24) of the outer filter element (20) and the third end cap (34) of the inner filter element (30) are sealed against each other.

3. Gas filter system (10) according to claim 2, wherein the third end cap (34) has a second sealing section (66) for sealing abutment against the first end cap (24), preferably in the radial direction.

4. Gas filter system (10) according to any one of the preceding claims, wherein the second end cap (26) of the outer filter element (20) and the fourth end cap (36) of the inner filter element (30) are sealed against each other.

5. Gas filter system (10) according to claim 4, wherein the fourth end cap (36) has a fourth sealing section (48) for sealing abutment against the second end cap (26), preferably in the radial direction.

6. Gas filter system (10) according to any one of the preceding claims, wherein the first end cap (24) of the outer filter element (20) has a first sealing section (42) for sealing abutment against a housing (12), preferably in the axial direction.

7. Gas filter system (10) according to any one of the preceding claims, wherein the third end cap (34) of the inner filter element (30) has a third sealing section (44) for sealing abutment against a housing (12).

8. Gas filter system (10) according to one of the preceding claims further comprising a housing (12), in which the outer and inner filter elements (20, 30) are arrangeable.

9. Gas filter system (10) according to claim 8, wherein the housing (12) has a central tube (52), which extends into the inner filter element (30) at the third end cap (34).

10. Gas filter system (10) according to claim 9, wherein the housing (12) has a dome (60), which protrudes into the central tube (52).

11. Gas filter system (10) according to claim 9 or 10, wherein the central tube (52) is held at an axial collar (46) of the housing (12).

12. Gas filter system (10) according to claim 11, wherein the third end cap (34) is sealed against the collar (46) or the central tube (52).

13. Gas filter system (10) according to any one of claims 8 to 12, wherein the fourth end cap (36) has a fifth sealing (56) section for sealing abutment against the central tube (52), preferably in the radial direction.

14. Gas filter system (10) according to any one of claims 8 to 13, wherein the second end cap (26) has a sixth sealing section (80) for sealing abutment against the central tube (52), preferably in the radial direction.

15. Gas filter system (10) according to claim 14, wherein the outer filter element (20) has a support tube (76), and wherein the support tube (76) has a radially inward facing end face (78), which end face (78) is embedded in the second end cap (26).

16. Gas filter system (10) according to any one of claims 8 to 15, wherein the housing (12) has a first skirt (70), which protrudes between the second end cap (26) and the fourth end cap (36).

17. Gas filter system (10) according to claim 16, wherein the second end cap (26) has a seventh sealing section (72) for sealing abutment against the first skirt (70), preferably in the radial direction.

18. Gas filter system (10) according to claim 16 or 17, wherein the fourth end cap (36) has an eighth sealing section (74) for sealing abutment against the first skirt (70), preferably in the radial direction.

19. Gas filter system (10) according to any one of claims 8 to 18, wherein the housing (12) has a second skirt (62), which protrudes into the inner filter element (30) at the fourth end cap (36).

20. Gas filter system (10) according to claim 19, wherein the fourth end cap (36) has a ninth sealing section (64) for sealing abutment against the second skirt (62), preferably in the radial direction.

21. Use of an outer filter element (20) and/or an inner filter element (30) in a gas filter system (10) according to one of the preceding claims.
